# EUROPEAN PATENT APPLICATION

(11) **EP 4 383 061 A1**
(43) Date of publication of application: **12.06.2024**
(21) Application number: 22315315.6
(22) Date of filing: 08.12.2022
(51) Int. Cl.: G06F 3/147, G02B 27/01

(54) **CONTROL MODULE FOR ADJUSTING A VALUE OF A PARAMETER OF A FUNCTIONALITY OF AN OPTICAL ELEMENT, OPTICAL DEVICE, COMPUTER IMPLEMENTED METHOD AND COMPUTER PROGRAM**

(71) Applicant: ESSILOR INTERNATIONAL, 94220 Charenton-Le-Pont (FR)
(72) Inventor: Drobe, Bjorn, 339346 SINGAPORE (SG); Gao, Yi, 138946 SINGAPORE (SG); Combier, Jessica, 31670 LABEGE (FR); Bouchier, Aude, 31000 TOULOUSE (FR); Marie, Sarah, 94220 CHARENTON-LE-PONT (FR)
(74) Representative: Korakis-Ménager, Sophie

(57) **Abstract**

Module for adjusting a value of a parameter of a functionality of an optical element, optical device, computer implemented method and computer program. The control module is configured to obtain a value of a parameter of a light coming from a region of interest viewed by a user through the optical element, to obtain a value of a parameter of an ambient light surrounding the region of interest and, to realize an adjustment of the value of the parameter of the functionality. The adjustment is according to the value of the parameter of the light coming from the region of interest and the value of the parameter of the ambient light, so as to take account of at least one specificity of the region of interest with respect to at least one specificity of a surrounding of the region of interest.

## Description

### Technical field

This disclosure relates to a control module configured to adjust a value of a parameter of a functionality of an optical element.

### Background

Visual fatigue is used to describe the complexity of the eye and vision-related problems that result from prolonged near work. This near work can be the reading of elements on digital devices such as computers, tablets, cell phones and e-readers but also on passive devices like books. When dealing with digital devices one often uses the terms computer vision syndrome (CVS) or digital eye strain. Due to the modern lifestyle, and the high prolonged near work, the prevalence of visual fatigue has been dramatically increasing to a very high degree in the last two decades.

The symptoms of visual fatigue can be caused by different factors like poor lighting, glare on a digital screen, improper viewing distances, long work hours, alert levels, light spectrum, reduced contrast, small font, and uncorrected, undercorrected or poorly corrected refractive errors.

One way to reduce visual fatigue is to adapt dynamically an optical element through which the user sees a scene.

One knows the US application reference US 2013/0114043. This disclosure describes an optical element comprising a see-through, near-eye mixed display device. The brightness of this display device can be controlled based on light intensity of what the user is gazing at. However, the control presented in this disclosure is not efficient when the user is gazing at an area with low luminosity or is gazing at something that does not emit light. Because of this inefficiency, the optical element of this disclosure does not allow an accurate limitation of the visual fatigue of the user.

Therefore, there is a need for a control module configured to adjust a value of a parameter of a functionality of an optical element that does not have the drawbacks of the modules of the state of the art.

### Summary

The following presents a simplified summary to provide a basic understanding of various aspects of this disclosure. This summary is not an extensive overview of all contemplated aspects and is intended to neither identify key or critical elements of all aspects nor delineate the scope of any or all aspects. The sole purpose is to present some concepts of one or more aspects in a simplified form as a prelude to the more detailed description that is presented later.

One aspect of this disclosure is a module for adjusting a value of a parameter of a functionality of an optical element. The control module is configured to obtain a value of a parameter of a light coming from a region of interest viewed by a user through the optical element, to obtain a value of a parameter of an ambient light surrounding the region of interest and, to realize an adjustment of the value of the parameter of the functionality. The adjustment is according to the value of the parameter of the light coming from the region of interest and the value of the parameter of the ambient light, so as to take account of at least one specificity of the region of interest with respect to at least one specificity of a surrounding of the region of interest.

The different features of the module, and more precisely the adjustment realized according to the value of the parameter of the light coming from the region of interest and the value of the parameter of the ambient light, so as to take account of at least one specificity of the region of interest with respect to at least one specificity of a surrounding of the region of interest, may allow a better limitation of the visual fatigue of the user.

More precisely, considering the specificity of the surrounding of the region of interest may allow a better adaptation of a contrast between the luminosity of the region of interest and the luminosity of the surrounding of the region of interest. Especially when the region of interest has a luminosity equal to or lower than the luminosity of the surrounding of the region of interest, using the adaptation of the US 2013/0114043 could lead to a contrast that is not enhanced or even a degradation of the visibility of the region of interest. This degradation may happen notably if the luminosity of the region of interest is high, but the luminosity of the surrounding of the region of interest is even higher. On the opposite, using the adaptation of this disclosure, one may consider the luminosity of the surrounding of the region of interest to adapt the optical element and to obtain for example a contrast that is suitable to limit the visual fatigue of the user.

Another aspect of this disclosure is an optical device intended to be worn by a user. The optical device comprises an optical element and a control module for adjusting a value of a parameter of a functionality of the optical element. The control module is configured: to obtain a value of a parameter of a light coming from a region of interest viewed by a user through the optical element, to obtain a value of a parameter of an ambient light surrounding the region of interest and, to realize an adjustment of the value of the parameter of the functionality. The adjustment is according to the value of the parameter of the light coming from the region of interest and the value of the parameter of the ambient light, so as to take account of at least one specificity of the region of interest with respect to at least one specificity of a surrounding of the region of interest.

Another aspect of this disclosure is a computer implemented method for adjusting a value of a parameter of a functionality of an optical element. The method comprises obtaining a value of a parameter of a light coming from a region of interest viewed by a user through an optical element, obtaining a value of a parameter of an ambient light surrounding the region of interest, and realizing an adjustment of the value of the parameter of the functionality. The adjustment is according to the value of the parameter of the light coming from the region of interest and the value of the parameter of the ambient light, so as to take account of at least one specificity of the region of interest with respect to at least one specificity of a surrounding of the region of interest.

Another aspect of this disclosure is a computer program comprising instructions which, when the computer program is executed by a control module, cause the control module to carry out a method for adjusting a value of a parameter of a functionality of an optical element. The method comprises obtaining a value of a parameter of a light coming from a region of interest viewed by a user through the optical element, obtaining a value of a parameter of an ambient light surrounding the region of interest, and, realizing an adjustment of the value of the parameter of the functionality. The adjustment being according to the value of the parameter of the light coming from the region of interest and the value of the parameter of the ambient light, so as to take account of at least one specificity of the region of interest with respect to at least one specificity of a surrounding of the region of interest.

A computer may include a memory and a processor. Examples of processors include microprocessors, microcontrollers, graphics processing units (GPUs), central processing units (CPUs), application processors, digital signal processors (DSPs), reduced instruction set computing (RISC) processors, systems on a chip (SoC), field-programmable gate arrays (FPGAs), programmable logic devices (PLDs), state machines, gated logic, discrete hardware circuits, and other suitable hardware configured to perform the various functionality described throughout this disclosure. The memory may be a computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor of the calculation module.

Another aspect of this disclosure is a non-transitory program storage device, readable by a computer, tangibly embodying a program of instructions executable by the computer to perform a method for adjusting a value of a parameter of a functionality of an optical element. The method comprises obtaining a value of a parameter of a light coming from a region of interest viewed by a user through an optical element, obtaining a value of a parameter of an ambient light surrounding the region of interest, and realizing an adjustment of the value of the parameter of the functionality. The adjustment is according to the value of the parameter of the light coming from the region of interest and the value of the parameter of the ambient light, so as to take account of at least one specificity of the region of interest with respect to at least one specificity of a surrounding of the region of interest. The method is compliant with the present disclosure.

### Description of the drawings

For a more complete understanding of the description provided herein and the advantages thereof, reference is now made to the brief descriptions below, taken in connection with the accompanying drawings and detailed description, wherein like reference numerals represent like parts.
Figure 1 represents a set comprising an optical element and a control module.
Figure 2 represents different fields of view of the user.
Figure 3 represents an optical device comprising the optical element.
Figure 4 represents an eyewear.
Figure 5 represents an augmented reality eyewear.
Figure 6 represents a method for adjusting a value of a parameter of a functionality of the optical element.
Figure 7 represents a further embodiment of the method of figure 6.
Figure 8 represents a method to change from a first mode to a second mode.
Figure 9 represents in another way the method of figure 7 or the method of the figure 8.
Figure 10 represents another embodiment of the method to change from a first mode to a second mode.
Figure 11 represents a first example of use of the set.

### Detailed description of embodiments

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form to avoid obscuring such concepts.

### Description of the set comprising the optical element and the control module

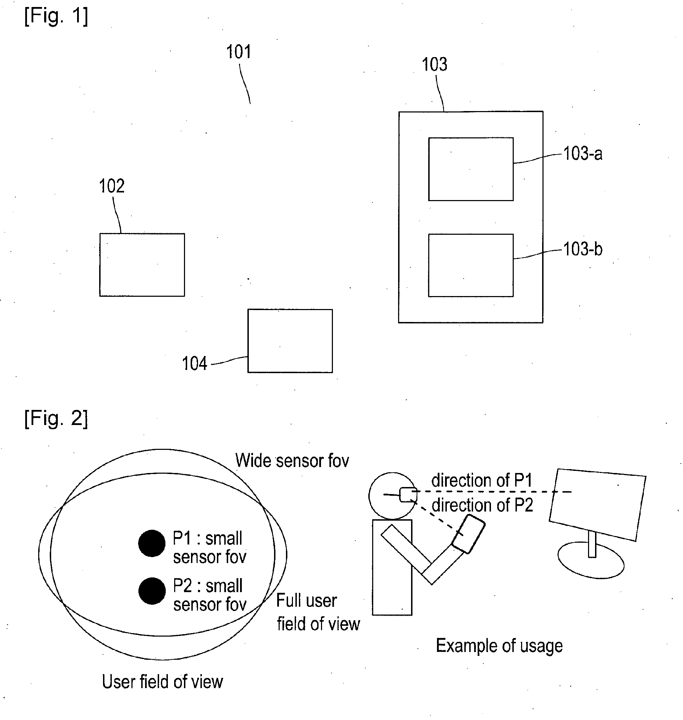

Figure 1 represents a set 101 comprising an optical element 102 and a control module 103.

The control module 103 is configured to control a value of a parameter of a functionality of the optical element 102.

The control module 103 controls the value of the parameter of the functionality so as to take account of at least one specificity of a region of interest with respect to at least one specificity of a surrounding of the region of interest.

Generally, the functionality is one of the following:
- a transmittance level of the optical element 102,
- a color filter of the optical element 102,
- a reflectance level of the optical element 102 and
- a parameter of a polarization of the optical element 102, for example a polarization angle of the optical element 102.

The control module 103 comprises a memory 103-a and a processor 103-b.

Examples of processors 103-b include microprocessors, microcontrollers, graphics processing units (GPUs), central processing units (CPUs), application processors, digital signal processors (DSPs), reduced instruction set computing (RISC) processors, systems on a chip (SoC), baseband processors, field-programmable gate arrays (FPGAs), programmable logic devices (PLDs), state machines, gated logic, discrete hardware circuits, and other suitable hardware configured to perform the various functionality described throughout this disclosure.

The memory 103-a is computer-readable media. Byway of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor 103-a of the control module 103.

The control module 103 may be included in independent module, for example, a smartphone or a computer. The control module 103 may also be a virtual machine located on a cloud network or a server not co-located with the user of the set 101.

The optical element 102 and the control module 103 may be in the same casing.

The set 101 may also comprise at least one sensor 104 for determining:
- a behavior of the user,
- the at least one specificity of a region of interest and/or
- the at least one specificity of a surrounding of the region of interest.

The at least one sensor 104 may be located in the same casing as the optical element 102 or the control module 103 or in a distinct casing.

The at least one sensor 104 may be chosen among:
- A gaze axis detection module,
- An inertial measurement unit (IMU) and
- A light detection module for example:
   o a camera,
   o a video luminance meter,
   o a photodetector
   o an ambient light sensor and
   o a color sensor for example a mini spectrometer
The video luminance meter is an apparatus to determine an amount of light received in a given angle of vision.

The gaze axis detection module may be for example an eye tracker. The eye tracker allows the determination of the behavior of the user by determining eye fixation, particular eye movement or eye direction. For example, when the user reads, the eye will have a specific eye movement restricted to the book page location. The eye tracker also allows the determination of a localization of the region of interest by using eye direction. Advantageously two eye trackers may be used to determine the gaze direction of both eyes. In this case a first eye tracker is associated with the right eye and a second eye tracker is associated with the left eye. The use of two eye trackers allows the determination of the eye convergence and then the distance to the region of interest (in this case the area observed by the user). If the region of interest is close, it is possible that the user is focusing his attention to a book, a smartphone or a bag. For example, the user may focus his attention to an inside part of a handbag to look for an object located inside the handbag. In some cases, the object may be close, like a camera's viewfinder or when looking through binoculars or a terrestrial telescope. The adaptation of the lens parameters may be different between the two lenses or the same.

The gaze axis detection module may also be an application implemented on a further electronic device.

The inertial measurement unit enables to determine specific head movement, head fixation or head orientation. For example, when the user watches a computer screen, its head may have specific head movement restricted to the screen location. Similarly, an inclinometer enables to detect some head movement. The inertial measurement unit may be used to determine the behavior of the user and also the localization of the region of interest.

The camera may be placed to face the user's environment (a field of view of the camera matches at least partially with a field of view of the user). This placement enables also to detect user head movement by estimating camera movement based on optical flow or structure from motion. This placement also allows the detection of the region of interest for example by detecting objects in images, such as smartphone, book, bag and computer. In embodiments one may also use two cameras, one with a low electrical consumption and one with a higher resolution. When this low consumption camera detects changes in the observed scene, the camera with the higher resolution may be turned on to obtain further data to confirm the situation. These changes may be a screen (smartphone, computer...) displaying a moving image, or a quick change of the luminosity and/or colors (the screen of the phone was off and it is now on). This will allow for example the detection of the presence of a display. The camera may also be used to distinguish area with a strong luminosity with respect to the luminosity of the background. Afterwards by knowing if the eye or the head of the user are oriented to the area or by knowing if the position of the area in the user field of view correspond to a usual readings position, the control module 102 may determine an intensity of the light coming from the region of interest. The camera may be oriented toward the eye in order to observe the reflection of the environment luminosity on the cornea. Then, it is possible to obtain the intensity of the light coming from the region of interest and an intensity of the ambient light surrounding the region of interest.

Therefore, the camera may be used to both determine the behavior of the user, the localization of the region of interest, the intensity of the light coming from the region of interest and the intensity of the ambient light surrounding the region of interest.

The light detection module may also be used to measure light spectrum or frequencies. This allows detecting objects emitting lights. The presence of the screen may be detected thanks to variations of light frequencies (flickering detection for example), to improve the detection of the variation one may use at the same time a module to determine a spectral measurement of light. The use of the spectral measurement of light allows to be less perturbed by the artificial ambient light. A change in spectrum indicates a change of nature of the light source, and the frequency will indicate what kind of source it may be (natural or artificial, for example). The spectral information of light may contain the light emitted by a screen, but also the light reflected and/or absorbed by a surface, such a book surface. Some surfaces may have spectral features and be recognized thanks to a spectral measurement. The luminosity measurement may also be an indication of the presence of an object in front of the user through a difference of luminosity of the object or a difference of reflectivity. Advantageously a sensor with a small field of view will be preferred for this measurement. In this case, a proximity sensor or a distance sensor may be used instead of or in addition to a luminosity sensor. The distance sensor may be based on time-of-flight (ToF) measurement, on proximity sensors, or on laser interferometry for example. It may be a measurement arranged as a single data, a one-dimensional data or a two-dimensional data (for example a small image). This distance measurement may be useful to detect for example the presence of an object closer than the surrounding environment in front of the user. It may be an additional measurement with spectral measurement, for example, or if the spectral feature is not characteristic enough to recognize the object, it may be the decisive measurement to control the value of the parameter of the optical function.

One may use a plurality of photodetectors with some having a wide field of view and some with a narrow field of view judiciously oriented. This plurality may be, for example, one or two large field sensors placed on a front part of a frame of an eyewear. The frame holds the optical element 102. The large field sensors may be oriented toward the front or the side of the user to measure the environment luminosity. The plurality may also comprise at least two narrow field of view sensors placed in a bridge or a rim of the frame and oriented to measure the luminosity coming potentially from near vision direction and intermediate vision direction, for closed objects like smartphone, or screens. A large field of view is higher than 90° and a narrow one is smaller than 45°, preferentially than 25°. This plurality allows determining the intensity of the light coming from the region of interest (using the photodetectors with the narrow field of view) and the intensity of the ambient light surrounding the region of interest (using the photodetectors with the wide field of view). One of the photodetectors with the narrow field of view could be centered on a lower part P2 of a field of view of the user. A second of the photodetectors with the narrow field of view could be centered on a higher part P1 of the field of view of the user.

The figure 2 represents the lower part P2 and the higher part P1. The lower part P2 corresponds to the position of the field of view of the user when reading on a smartphone or a book or when looking at the ground or in a bag. The higher part P1 corresponds to the position when looking at an element placed in front and at distance of the user, for example a screen.

The photodetector may also be coupled to the inertial measurement unit. From the measurement of the inertial measurement unit, one may compute the head orientation online using for example a Kalman filter. After that one may reconstruct a rough light map of the environment by storing the luminosity for the corresponding head orientation while the user is moving his head. This method has been described in patent application reference EP3650811 filed by the applicant of this disclosure and with inventors being BOUCHIER Aude, CANO Jean-Paul, COMBIER Jessica and VANDEPORTAELE Bertrand.

The photodetector may also be configured to measure a polarization of the received light. This allows a better determination of the intensity of the light. The measurement of the polarization of the received light may also allow the detection of the presence of polarized emissive screens like for example LCD screens. The polarization direction of the light emitted by these polarized emissive screens may be different from a polarization direction of the light reflected on water or windows. It may also be a method to detect the reflections on the screen of a smartphone or other reflective objects. If the lenses have an adjustable polarization filter, the knowledge of the polarization of the light coming from the region of interest will help the adjustment of the value of the parameters of the polarization filter. For example, one may adjust the value of the parameters of the polarization filter to reduce the local luminosity while preserving the background luminosity or to correctly balance the luminosity of the object compared to the one of the backgrounds.

Color sensor or mini-spectrometer may indicate which color is dominant in the light coming from the region of interest and not in the ambient light surrounding the region of interest. Like previously, the sensors may be judiciously oriented in the user field of view. They may be placed in the bridge of the frame, for example, and oriented in the direction corresponding to near and/or intermediate vision of the user. If the lenses can apply variable color filter, the dominant color could be reduced for the user, or the contrast could be improved. The variable color filter may be used to protect against UV or against blue source and then avoid degradations of the eye of the user.

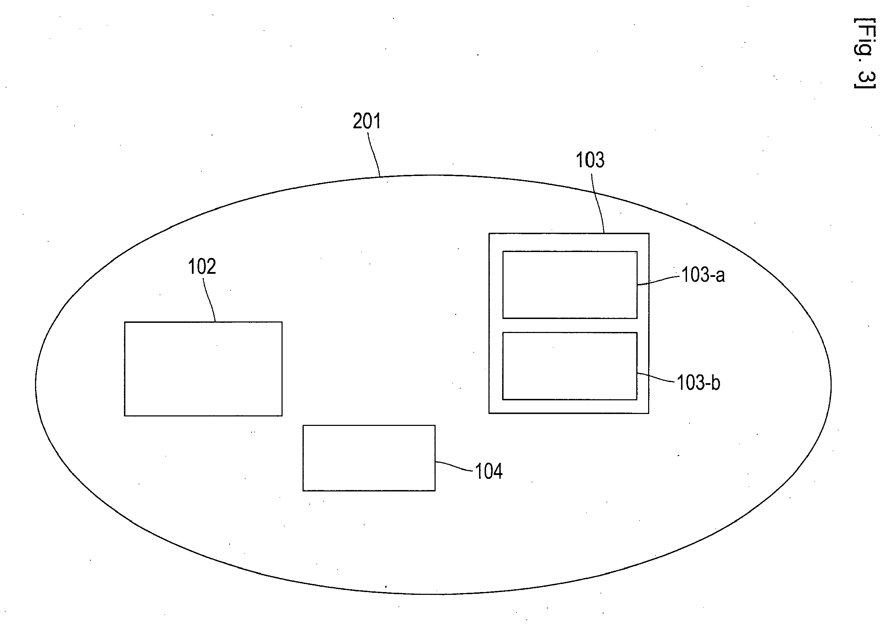

The figure 3 represents an embodiment comprising an optical device 201. As presented in figure 3, the optical device 201 comprises the optical element 102. Optionally and as presented in figure 3 the optical device 201 comprises the at least one sensor 104 for example the light detection module or the gaze axis detection module.

The optical device 201 also comprises the control module 103. In variants, if the control module 103 is not comprised in the optical device 201, the control module 103 is included in an independent module, for example, a smartphone, a computer, a system on chip (SoC) or a graphics processing unit (GPU). In this case communication means can be integrated in the optical device 201 and the control module 103 to allow control and command of the optical device 201 by the control module 103. The control module 103 may also be a virtual machine located on a cloud network or a server not co-located with the user of the optical device 201.

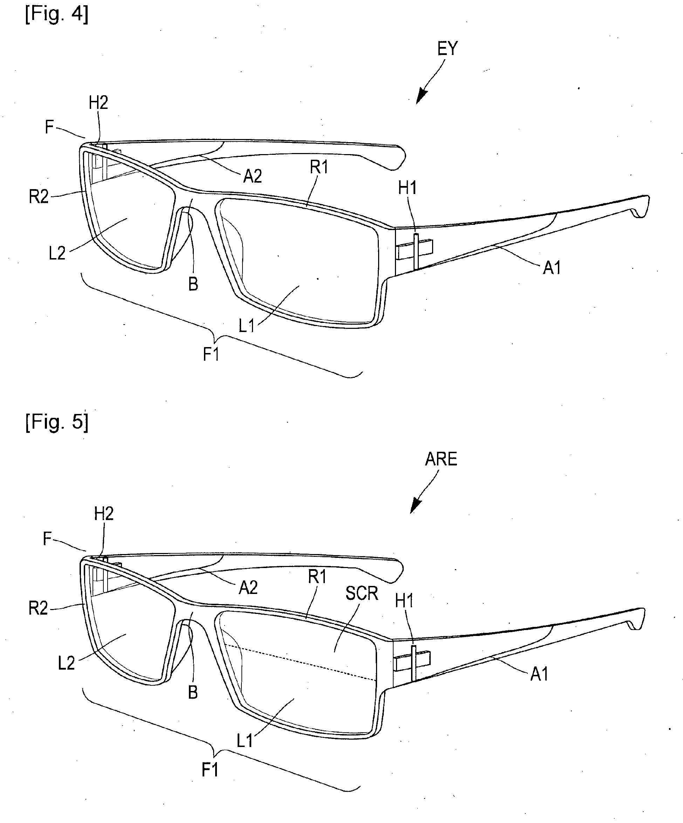

The figure 4 represents an eyewear EY, which is an example of the optical device 102. This eyewear EY comprises two lenses L1 and L2 and a frame F. The frame F comprises two arms or temples A1 and A2 and a front part F1. The front part F1 comprises a right rim R1 and left rim R2 linked together by a bridge B. The front part F1 and the two arms A1 and A2 are linked using two hinges H1 and H2. The hinges H1 and H2 allow the user to fold the arms A1 and A2 along the front part F1. The rims R1 and R2 of the frame F1 are configured to receive and to maintain the lenses L1 and L2. One or both of the lenses L1 or L2 may be an electrochromic lens on which the transmission or the reflection may be controlled.

The figure 5 represents an augmented reality eyewear ARE, which is another example of the optical device 201. This augmented reality eyewear ARE comprises also two lenses L1 and L2 and a frame F. In a similar way to the eyewear EY, the lenses L1 and L2 are examples of the optical element 102. The frame F comprises two arms or temples A1 and A2 and a front part F1. The front part F1 comprises a right rim R1 and left rim R2 linked together by a bridge B. The front part F1 and the two arms A1 and A2 are linked using two hinges H1 and H2. The hinges H1 and H2 allow the user to fold the arms A1 and A2 along the front part F1. The rims R1 and R2 of the frame F1 are configured to receive and to maintain the lenses L1 and L2. Furthermore, the augmented reality eyewear ARE comprises a screen SCR, generally a see-through display or transparent display. The screen SCR may also be composed of a part in or on the lens L1 to display the virtual image in front of the sight of the user and another part mainly placed in the arms of the frame used to project the image on the dedicated part of the lens L1. In a similar way to the eyewear EY, one or both of the lenses L1 or L2 may be an electrochromic lens on which the transmission or the reflection may be controlled. In this case the parameter of the functionality is a transmittance level of the electrochromic lenses or a reflectance level of the electrochromic lenses.

The electrochromic lenses of figure 4 and figure 5 are a type of optical elements 102. When the optical element 102 is an electrochromic lens, the parameter of the functionality may be a transmittance level of the optical element 102, a reflectance level of the optical element 102 or a parameter of a polarization of the optical element 102.

The electrochromic lenses may change their tint (transmittance ratio and/or color filter). This enables to adapt the brightness of the scene for the user by adjusting the transmittance ratio for the complete visible spectrum or for some specific wavelength to improve contrast or visual comfort. The electrochromic lenses may also activate a blue cut filter. In addition, the electrochromic lenses may also change their tint locally, to adapt the user perception for all or portions of the region of interest. For example, if the areas of interest are darker than the surrounding environment, the corresponding portions of the lenses may be clearer than the rest of the lenses, and if the areas of interest are clearer than the surrounding environment, the corresponding portions of the lenses may be darker than the rest of the lenses.

The electrochromic lenses may be adaptive polarizable lenses. They may activate a polarization filter and choose the polarization angle. This enables to adapt the brightness of the scene for the user by reducing the transmittance ratio for specific polarity degree to improve contrast. It may be particularly useful when the ground is reflective (snow, water) or with a screen (reflection of sun on the screen of the smartphone, for example, or to decrease the screen luminosity).

The electrochromic optical lens may comprise a plurality of pixels on which the value of the parameter of the functionality may be independently adjusted.

Each pixel may comprise a liquid crystal or any other electrochromic material (including liquids, gels, solid materials). Each pixel has two terminals on which an electrical voltage may be applied. The value of the parameter of the functionality on each pixel is adjusted by adjusting the electrical voltage applied to the terminals of the pixel.

In an embodiment, a single control module 102 may control all the pixels. In another embodiment, each pixel may also be controlled by a different control module. In another embodiment, a plurality of control modules 102 may control each respective parts of the pixels.

The electrochromic optical lens may comprise of a plurality of electrochromic films on which the value of the parameter of the functionality may be independently adjusted.

Each electrochromic film is connected to a coil forming terminals on which an electrical voltage may be applied. The value of the parameter of the functionality of each electrochromic film is adjusted by adjusting the electrical voltage applied to the coil.

In the eyewear EY of figure 4 or the augmented reality eyewear ARE of figure 5 the control module 102 may be located in one of the two arms A1 and A2.

The optical element 102 may also comprise the screen SCR of the augmented reality eyewear ARE and the electrochromic lenses. In this case, the display luminosity, or the reflection of the active holographic mirror of the screen SCR may be adjusted simultaneously to the transmission and/or color and/or polarization of the electrochromic lenses to allow a comfortable reading of the virtual information or a suppression of this information if the region of interest is the smartphone, screen, or book, etc.

This adjustment of the value of the parameter of the functionality is realized based on:
- a value of a parameter of a light coming from a region of interest viewed by a user through the optical element 102,
- a value of a parameter of an ambient light surrounding the region of interest.

This adjustment is realized, so as to take account of a specificity of a region of interest with respect to a specificity of a surrounding of the region of interest.

When doing the adjustment, the value of the parameter of the light coming from the region of interest may be treated differently from the value of the parameter of the ambient light.

The region of interest may be for example an object.

The object may be a medium for recording information in the form of writing or images, typically composed of many pages (made of papyrus, parchment, vellum, or paper) bound together and protected by a cover. This medium may be a book, a magazine or a newspaper.

The object may also be an electronic device comprising a screen. This electronic device may be for example a smartphone or a computer. The electronic device may include all or part of the control module 103, the at least one sensor 104 (light detection module, the gaze axis detection module or a light detection module configured to determine the value of the parameter of the ambient light).

The electronic device and the control module 103 may be linked (advantageously wirelessly) to allow the transmission of the values between the electronic device and the control module 103.

### Description of the method for adjusting the value of the parameter of the optical element

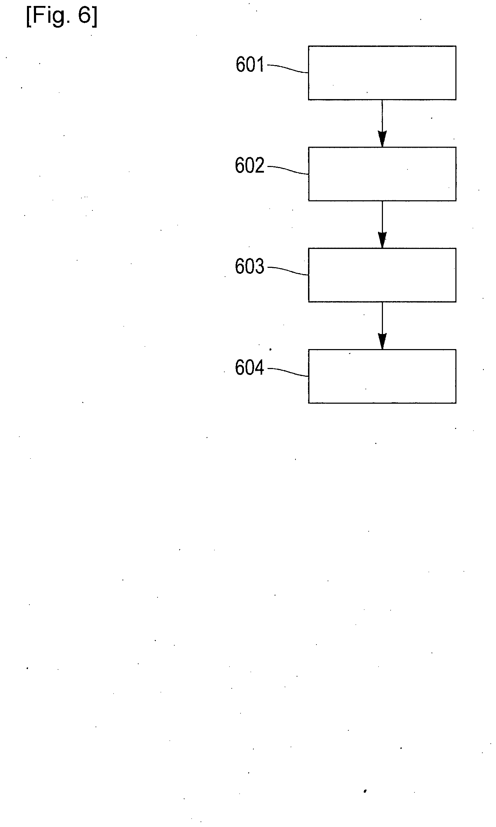

To realize this adjustment, the memory 103-a may store a computer program comprising instructions which, when the program is executed by the processor 103-b, cause the control module 103 to carry out a method, for example a computer implemented method, for adjusting the value of the parameter of the functionality of the optical element 102. The method as presented in figure 6 comprises:
- A step 601 of obtaining a value of a parameter of a light coming from a region of interest viewed by a user through an optical element 102,
- A step 602 of obtaining a value of a parameter of an ambient light surrounding the region of interest,
- A step 604 of realizing an adjustment of the value of the parameter of the functionality, the adjustment being according to the value of the parameter of the light coming from the region of interest and the value of the parameter of the ambient light, so as to take account of at least one specificity of the region of interest with respect to at least one specificity of a surrounding of the region of interest.

The method of the figure 6 may also comprise a step 603 of obtaining a first area of the optical element 102, across which the region of interest is viewed by the user.

The step 604 of realizing the adjustment may comprise an adjustment of at least one of:
- a value of a parameter of a functionality of the optical element 102 on the first area and of
- a value of the parameter of the functionality on a second area of the optical element 102.

In the method the second area is adjacent to the first area. The adjustment is according to the value of the parameter of the light coming from the region of interest and the value of the parameter of the ambient light.

In this disclosure the second area is adjacent to the first area, if the second area has at least a part of its border in common with the border of the first area.

The second area may be all or9 part of the optical element not covered by the first area.

In an embodiment the method of figure 6 is a computer implemented method and the control module 103, more precisely the memory 103-a may comprise a computer program comprising instructions which, when the program is executed by the control module, cause the control module to carry out the method for adjusting a value of a parameter of a functionality of an optical element.

In an embodiment the value of the parameter of the functionality is adjusted only on the first area or only on the second area.

In an embodiment the value of the parameter of the functionality is adjusted differently on the first area and on the second area.

When the optical element 102 is the electrochromic optical lens comprising the plurality of the pixels, the control module 103 may be configured:
- to determine first pixels of the plurality of the pixels included in the first area and/or second pixels of the plurality of the pixels included in the second area,
- to adjust the value of the parameter of the functionality on the first pixels and/or to adjust the value of the parameter of the functionality on the second pixels.

When the optical element 102 is the electrochromic optical lens comprising the plurality of the electrochromic films, the control module 103 may be configured:
- to determine first electrochromic films of the plurality of the electrochromic films included in the first area and/or second electrochromic films of the plurality of the electrochromic films included in the second area,
- to adjust the value of the parameter of the functionality on the first electrochromic films and/or to adjust the value of the parameter of the functionality on the second electrochromic films.

The method of the figure 6 may also comprise a step of determining a contrast using the value of the parameter of the light coming from the region of interest and the value of the parameter of the ambient light. The adjustment of the step 604 is realized according to the contrast.

More precisely the method may comprise:
- a step of determining a contrast between the value of the parameter of the light coming from the region of interest and the value of the parameter of the ambient light,
- a step of adjusting the value of the parameter of the functionality on the first area and/or the value of the parameter of the functionality on the second area, according to the contrast and a contrast threshold.

A contrast is generally defined as the contradiction in luminance or colour that makes an object distinguishable. For example, the contrast may be expressed as a contrast ratio such as a luminance or brightness ratio.

The contrast threshold may be a contrast threshold ratio and may be predetermined. The contrast threshold is generally a positive number. The contrast threshold is predetermined according to the amount of ambient light and the individual profile of the user. The contrast threshold is predetermined to achieve the best comfort to the user. The individual profile of the user may comprise a pre-determined preference of brightness ratio or spectrum composition, sensitivity to light and spectrum, age, height etc.

The parameter of the ambient light is chosen among:
- an amount of the ambient light,
- a spectral density of the ambient light,
- an amount of the ambient light on a plurality of frequency bands and
- a polarization distribution of the ambient light,

The parameter of the light coming from the region of interest is chosen among:
- an amount of the light coming from the region of interest,
- a spectral density of the light coming from the region of interest,
- an amount of the light coming from the element on a plurality of frequency bands and
- a polarization distribution of the light coming from the region of interest.

In other words, in a first use case the method allows following the contrast between the ambient light and the light of the region of interest and modifying the transmission level of the first area and/or the second area to let the user see a constant adapted contrast allowing the reduction of the visual fatigue. Using the method and set of this disclosure one may monitor and adjust the transmittance level locally on the lenses, achieves visual comfort/reduce visual fatigue by balancing the luminance ratio between the region of interest and the ambient light.

In an example of this first use case, when device usage is detected, first one determines a target ratio of background and screen brightness depending on the environment luminance level; then data, including brightness and dimensions of the digital device, viewing distance and angle, environment luminance etc., are gathered to determine the target region and target transmittance. Finally, the active glasses adjust the transmittance level of the target region on the glasses to achieve the target ratio of luminance at the eye level of the user; the method is repeated at a predetermined temporal frequency (such as 1Hz) to achieve constant monitoring and adjusting. Optionally some measurements may be made without processing the complete method to check if a light condition has changed between two complete realizations of the adjustment method.

In other words, the control module 103 in those examples allows the adjustment of the transmission (or other parameter like colour or polarization) of the optical element 102. The aim of this adjustment is to obtain a predetermined ratio between the luminosity of the region of interest (for example screen, smartphone, keys in the bag, and so on) and the luminosity of the background that is comfortable for the user. This may be obtained locally or on the whole optical element 102. Transmission level may be managed to optimize vision while not deteriorating glare discomfort. One may also adapt the predetermined ratio to optimize the vision. The optimization depends on visual stimulus parameters (general such as mean luminance or more precisely such as size, colour, contrast) and visual capacity.

The visual capacity may be the visual acuity, the contrast sensitivity, eye diffusion, glare sensitivity etc... The visual capacity may be set in the calculation module 103 to be representative of the visual capacity of a healthy person. The visual capacity may be segmented according to the age of the user, the visual acuity of the user and/or the contrast sensitivity of the user. It allows optimisation of the constraints without long parametrisation. The visual capacity may be fully personalised, for example using contrast sensitivity thresholds for different sizes of the pupil of the user and different luminance levels.

A general rule in low vision that may be used in non-pathologic people, is contrast and acuity reserve. In daily life, it needs a lot of effort to see / read at the threshold limits. Performance is optimized in reading while letters size is 2 to 4 times the visual acuity and 2 to 4 times contrast threshold. If light condition is not recorded using luminance map, vision optimisation may be used to set the transmission of the lens in order that luminance / illuminance of the region of interest is at photopic level (were cones work at their full potential).

The protection against the discomfort may depend on the intensity of the background light, and luminance contrast in the field or between background and the region of interest.

The optimization may depend on the available detectors and type of lenses (full or locally adjusted transmission / polarisation / colour).

In case of a less constrained situation with sensors that record luminance map and eye tracker and transmission locally manageable, mean transmission / polarisation may be set for mean luminance of the field of view and slightly decreased at glare source localization (for example + 0.1*Log10(Transmission)), and slightly increased in the direction of attention (for example - 0.1*Log10(Transmission)).

In case of a more constrained situation, while transmission / polarisation are not locally manageable, transmission / polarisation may be adjusted as a compromise between vision and comfort (in between condition or vision preference or comfort preference to be set in the algorithm). Transmission level and variation in time may be used. If optimal condition cannot be reached immediately, eye adaptation to light level can be used and transmission can increase slowly in order to improve vision without comfort deterioration.

When the parameter of the functionality is the transmittance level, this transmittance level may be adjusted so that the contrast is close to the threshold ratio. When the contrast is above the threshold ratio, the transmittance level of the first area may be increased (by lightening the first area of the optical element) and/or the transmittance level of the second area may be decreased (by darkening the second area the optical element). When the contrast is below the threshold ratio, the transmittance level of the first area may be decreased (by darkening the first area of the optical element) and/or the transmittance level of the second area may be decreased (by lightening the second area of the optical element).

In an embodiment the value of the parameter of the ambient light is received from the light detection module. The value of the parameter of the light coming from the region of interest may be obtained from the same light detection module or from another light detection module.

The method of the figure 6 may also comprise:
- a step of receiving from the object of the region of interest:
   ∘ a distance between the object and the optical element 102,
   ∘ an angle between the object and the optical element 102,
   ∘ a position of the object with respect to the optical element 102 and
   ∘ value of parameters representing a position of the optical element 102 with respect to a face of the user (for example when the optical element 102 is the electrochromic optical lens: vertex distance and pantoscopic angle)
- a step of determining the first area using the distance, the angle and/or the position.

The pantoscopic angle is the angle between a plane, formed by the front of the frame, and the temple.

To determine the parameters of the previous section, the object may comprise infrared sensor(s) or camera(s).

The first area may also be obtained from the object. In this case the object may implement an application that determine the first area.

The first area may be determined based on a gaze axis of the user, the gaze axis of the user being obtained from the gaze axis detection module.

Personalization may be achieved by measuring the preferred luminance ratio in habitual conditions of each user. The transmittance adjustment may also be generalized into a preferred colour spectrum of the lenses. For example, some users may prefer slightly yellowish lenses under bright sunshine, others may prefer only grey shade.

The calculation may further integrate other information such as individual light sensitivity, or individual visual fatigability profile to personalize the adjustment.

In order to accelerate this personalization, one may use habitual postures in habitual use cases to determine the habitual region to adjust in each condition, then only calculate and adjust the target transmittance level constantly. The target transmittance is also simplified as it is not calculated based on the relative position of glasses and device (viewing distance and angle) anymore.

The method may be accelerated in this way because less measurement and calculation are requested.

Another way to accelerate is to use the users' habits including device, posture, working and entertaining environment, weather etc. to predict the changes on the target region and target transmittance in order to reduce the constant calculation. For example, use the information about sunlight level throughout the day on a certain day of the year, together with weather forecast to predict the background luminance level; or use the information about the user's habits in gradually changing viewing distance and angle as he or she works or plays for a longer time to predict the target region.

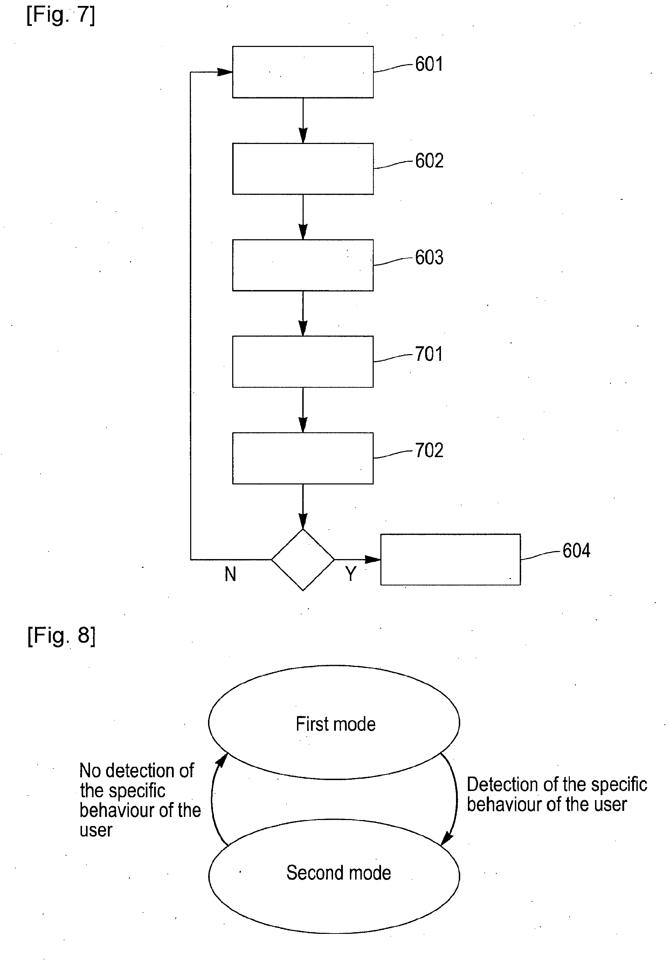

The figure 7 represents a further embodiment of the method, of the figure 6, for adjusting a value a parameter of a functionality of the optical element 102. In addition to the steps of the figure 6, in this embodiment the method also comprises:
- A step 701 of obtaining a behaviour of the user and
- A step 702 of comparing the behaviour of the user with a predetermined behaviour.
When the behaviour of the user matches with the predetermined behaviour the step 604 the adjustment is realized.

In other words, in the embodiment of figure 7, the method also comprises a test comparing the behaviour of the user with one or several predetermined behaviours. If the behaviour of the user matches with one of the predetermined behaviours the step 604 is realized.

In the figure 7 the step 701, the step 702 and the test are realized between the step 603 and the step 604. In other embodiments the step 701, the step 702 and the test may be realized at other time as long as they are realized before the step 604.

The behaviour of the user may be obtained using the at least one sensor 104 for example the light detection module or the gaze axis detection module.

The predetermined behaviour may be one of the following:
- a movement of an eye of the user,
- a movement of a head of the user,
- an activity of the user, for example reading a book or looking at a smartphone and
- a gaze axis of the user toward a specific region.

The method of the figure 7 may also comprise a step of determining a duration during which the user maintained the behaviour. When the duration is above a duration threshold the step 604 of adjustment is realized. This allows a better detection of the behaviour and more precisely reduce false detection; by allowing the verification of the behaviour during a predetermined duration.

The duration threshold may be chosen according to a duration of the last time the user had a previous behaviour identical to the predetermined behaviour.

Using the embodiment of the figure 7 one may use two different modes (mode 1 and mode 2). The value of the parameter of the functionality is adjusted differently in the two modes. In a first mode (mode 1) this adjustment may be a regular one not taking account of at least one specificity of the region of interest with respect to at least one specificity of a surrounding of the region of interest. In the second mode (mode 2) the value adjusted so as to take account of at least one specificity of the region of interest with respect to at least one specificity of a surrounding of the region of interest.

As presented in figure 8, to change from the first mode to the second mode, one may detect the behaviour of the user. The behaviour of the user may be for example reading a book or looking at a smartphone. The detection of the situation may be realized by a detection of three elements: specific user behaviour detection (head or eye movement or fixation), specific object detection (book, smartphone, and computer) and optionally detection of predetermined lightening conditions (dark/bright area detection dark street, undergrowth).

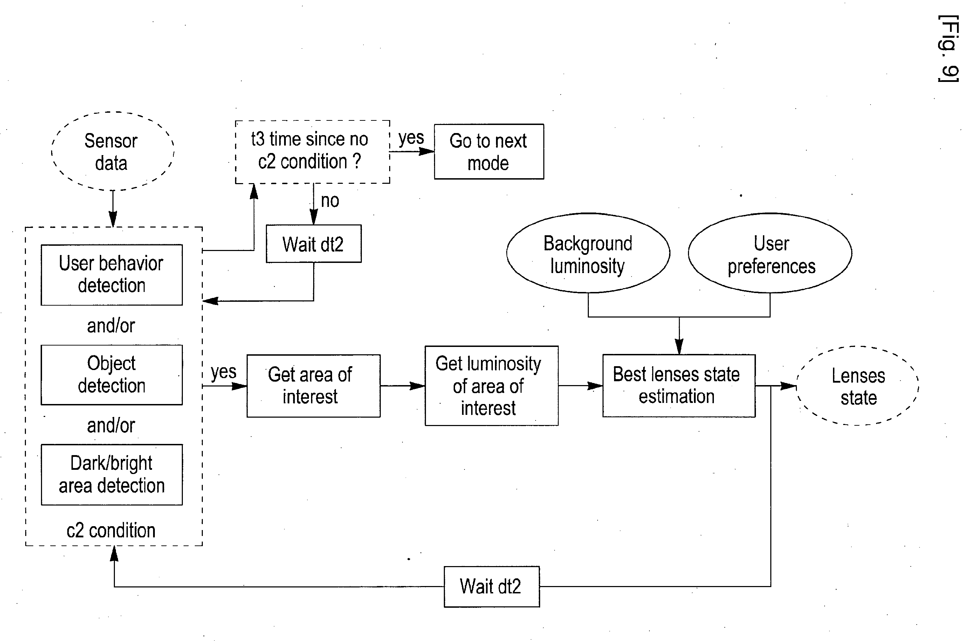

The figure 9 represents in another way the method of the figure 7 or the figure 8. Regularly the condition to change between mode 1 and mode 2 is tested and, when it is satisfied, the control module 103 estimates the region of interest and the value of the parameter of the light coming from the region of interest and the value of the parameter of the ambient light. Afterwards, the value of the functionality is adjusted, by the control module 103, considering the region of interest and the value of the parameter of the light coming from the region of interest and the value of the parameter of the ambient light. The control module 103 may also consider preferences of the user. If the condition to change between mode 1 and mode 2 is no longer satisfied, the control module 102 evaluates if it should begin a transition back to mode 1 or memory mode 1. If it is not necessary, it waits a predetermined time before testing again if the condition is satisfied.

In an embodiment the behaviour may be a first behaviour of the user and the predetermined behaviour may be a first predetermined behaviour. The method presented in figure 7, may also comprise:
- a step of obtaining a second behaviour of the user,
- a step of comparing the second behaviour with a second predetermined behaviour.
When the second behaviour of the user matches with the second predetermined behaviour the method also comprises:
A step of realizing a second adjustment of the value of the parameter of the functionality on the first area or of the value of the parameter of the functionality on the second area,
the second adjustment being according to only one among the value of the parameter of the light coming from the region of interest and the value of the parameter of the ambient light.

The second behaviour may be for example an opposite of the first behaviour or an absence of the first behaviour. The second behaviour may also be chosen among:
- a movement of an eye of the user,
- a movement of a head of the user,
- an activity of the user,
- a gaze axis of the user toward a specific region and
- an activity, for example reading a book or looking at a smartphone.

Generally, the second behaviour is realized by the user after the first behaviour.

In a similar way to the first behaviour the second behaviour must in some embodiments be hold during enough time to change the type of adjustment. In this case, the duration is a first duration, and the duration threshold is a first duration threshold. The method may also comprise a step of determining a second duration during which the user maintained the second behaviour. When the second duration is above a second duration threshold the step of realizing a second adjustment is realized. In a similar way to the first behaviour, this allows a better detection of the second behaviour and more precisely reduce false detection; by allowing the verification of the second behaviour during a predetermined duration.

In other words, the end of the first behaviour and the maintaining of the second behaviour during the second predetermined time may enable the transition from mode 2 to mode 1 during which the second adjustment is according to only one among the value of the parameter of the light coming from the region of interest and the value of the parameter of the ambient light.

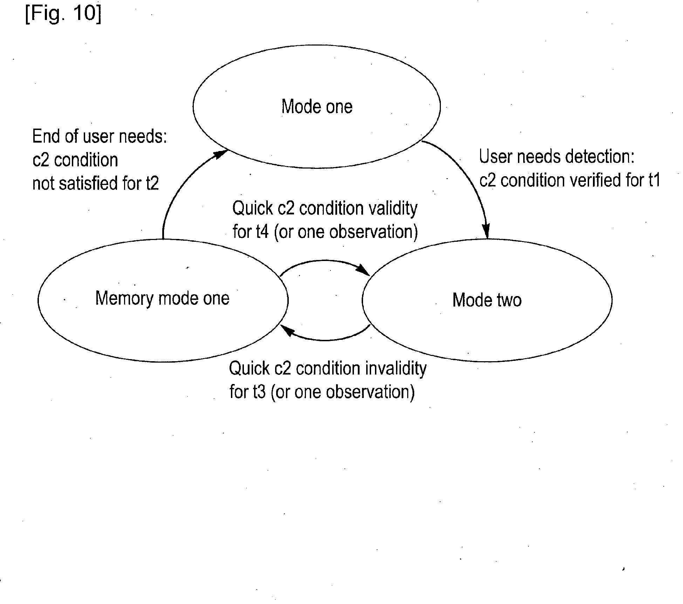

In a similar way to the first duration threshold, the second duration threshold may be chosen according to a duration of the last time the user had a previous behaviour identical to the second predetermined behaviour. It may also depend of the first behaviour and a duration of the last time the user had the first behaviour. This allows to reduce the latency of the switching between the two modes. It then increases the comfort if the user is alternatively succeeding mode one and mode two. For example, if the user discusses with someone else and reads a book in parallel, he will successively turn his head to watch the book or his interlocutor. In other words, this allows a virtual memory mode. This is illustrated in figure 10, as described the virtual memory mode is activated when the c2 condition is invalid immediately after the first observation or for a shorter time t3. It works similarly as mode one when it is activated, only mode transition changes. With the same principle, the transition from memory mode 1 to mode 2 appends when c2 condition is valid for a single observation or for a shorter time t4 This method allows handling transition quickly without latency. Afterwards the device moves back from memory mode 1 to mode 1 when c2 condition are invalid for a time t2.

### Examples of use of the set 101

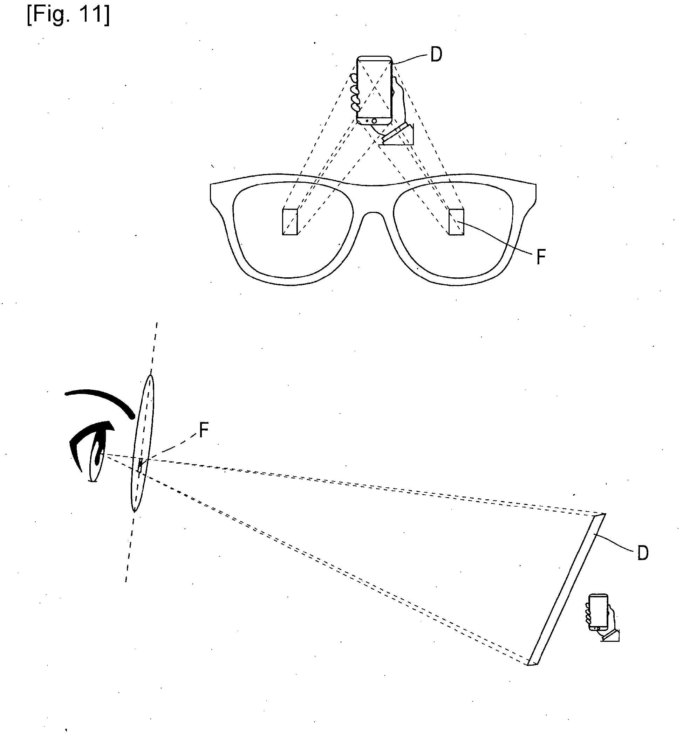

The figure 11 illustrates a first example of use of the set 101. In figure 11 the region of interest is the device D hold by the user. In figure 11, the first area F across which the device D is viewed by the user is represented.

In a second example the set 101 may comprise eyewear with two electrochromic lenses and three photodetectors. One photodetector has a wide field of view (around 120 degree) to measure the global luminosity facing the user and two photodetectors with a small field of view (around 20 degree) oriented to two different directions viewing respectively P1 and P2 part of the field of view of the user. Preferably the two different directions correspond to near vision gaze direction. The three photodetectors may also be replaced by a camera. By comparing the light intensity of the region of interest and the intensity of the ambient light, it is possible to detect bright or dark area in specific user gaze direction. Therefore, according to the ratio of these lights one may decide to adjust the value of the transmission of the lenses. If the ratio is lower or higher than a threshold for a time t1, the sub-condition "bright/dark area detection" is filled and the value of the transmission level is adjusted accordingly. This set 101 has the advantage to be ultra-low power, because there is neither camera nor eye tracking. This set 101 has also the advantage of allowing the detection of the bright and dark areas independently of the sight direction of the user.

In a third example the eyewear may include an eye-tracker for user behaviour detection. The control module 102 may then regularly estimates the user eye movement (small eye movement restricted to a part of the field of view) or gaze direction. A user behaviour is detected, when the eye movement corresponds to a focusing action as reading or looking/search locally something or when the gaze direction stays in a restricted part of the field of view for a time t1. Furthermore, the control module 102 may detect a difference of intensity of the light between a dark area and a bright area. The eye tracker may also be used to detect in the reflections on the cornea the presence of bright object or dark object in the gaze direction.

In a fourth example the eyewear may comprise a camera. Thanks to this camera one may use object detection on the camera image. It is then possible to detect specific object as book, screen, computer and bag. By identifying the object position in the user field of view, we may deduce the probability that the user is looking at this object. One may consider that, if the object is located in the P1 or P2 part (see figure 2) of the field of view there is more probability that the user is looking at this object than if the object is located the periphery. In addition, the head movement may be estimated from the global movement registered on images. From this head movement, one may detect specific head movement related to reading activity. These two last points (object position and head movement) allow validating the sub-condition user behaviour detection. The last sub-condition may be validated by comparing the local luminosity of the detected object (or the P1 or P2 part of the field of view) with the global luminosity on the full field of view. If the luminosity difference (indicated by the ratio between intensity of the ambient light and the intensity of the light coming from the object) is important and the local area impacted is large, the sub-condition is filled.

It is then better to introduce sensors to detect user behaviour. For example, to avoid considering constantly the P1 part of the field of view, a variant may be to consider it only when the head is bent. This is detectable with an IMU. The use of an IMU may allows a reduction of the electrical consumption.

## Claims

1. Control module (103) for adjusting a value of a parameter of a functionality of an optical element (102), the control module (103) being configured:
- to obtain a value of a parameter of a light coming from a region of interest viewed by a user through the optical element (102),
- to obtain a value of a parameter of an ambient light surrounding the region of interest and,
- to realize an adjustment of the value of the parameter of the functionality,
the adjustment being according to the value of the parameter of the light coming from the region of interest and the value of the parameter of the ambient light, so as to take account of at least one specificity of the region of interest with respect to at least one specificity of a surrounding of the region of interest.

2. The control module (103) according to the claim 1, the control module (103) being also configured:
- to obtain a first area of the optical element, across which the region of interest is viewed by the user,
- to realize the adjustment of at least one of:
• a value of the parameter of the functionality on the first area and of
• a value of the parameter of the functionality on a second area of the optical element, the second area being adjacent to the first area.

3. The control module (103) according to the claim 1 or 2,
when realizing the adjustment, the value of the parameter of the light coming from the region of interest being treated differently from the value of the parameter of the ambient light.

4. The control module (103) according to any of the claims 1 to 3, the control module (103) being also configured:
- to obtain a behaviour of the user,
- to compare the behaviour of the user with a predetermined behaviour,
when the behaviour of the user matches with the predetermined behaviour the control module (103) being configured to realize the adjustment.

5. The control module (103) according to the claim 4, the predetermined behaviour being chosen among:
- a movement of an eye of the user
- a movement of a head of the user,
- an activity of the user and
- a gaze axis of the user toward a specific region.

6. The control module (103) according to the claim 4 or 5,
the behaviour being a first behaviour,
the predetermined behaviour being a first predetermined behaviour,
the adjustment being a first adjustment,
the control module (103) being also configured:
- to obtain a second behaviour of the user,
- to compare the second behaviour with a second predetermined behaviour,
when the second behaviour of the user matches with the second predetermined behaviour the control module (103) being configured to realize a second adjustment of the value of the parameter of the functionality,
the second adjustment being according to only one among the value of the parameter of the light coming from the region of interest and the value of the parameter of the ambient light.

7. The control module (103) according to any one of the claims 1 to 3, the control module (103) being configured:
- to determine a first contrast using the value of the parameter of the light coming from the region of interest and the value of the parameter of the ambient light,
- to determine, by using the first contrast, when to realize the adjustment.

8. The control module (103) according to any one of the claims 1 to 7,
the control module (103) being configured:
- to determine a second contrast using the value of the parameter of the light coming from the region of interest and the value of the parameter of the ambient light,
the adjustment being realized according to the second contrast.

9. The control module (103) according to any one of the claims 1 to 8,
the parameter of the ambient light being chosen among:
• an amount of the ambient light,
• a spectral density of the ambient light,
• an amount of the ambient light on a plurality of frequency bands and
• a polarization distribution of the ambient light,
and/or the parameter of the light coming from the region of interest being chosen among:
• an amount of the light coming from the region of interest,
• a spectral density of the light coming from the region of interest,
• an amount of the light coming from the element on a plurality of frequency bands and
• a polarization distribution of the light coming from the region of interest.

10. The control module (103) according to any one of the claims 1 to 9,
the parameter of the functionality being at least one of a transmittance level of the optical element (102), a reflectance level of the optical element (102) and of at least one parameter of a polarization of the optical element (102).

11. The control module (103) according to any one of the claims 1 to 10,
the control module (103) being configured for at least one of:
• obtaining, from a first light detection module, the value of the parameter of the ambient light and of
• obtaining, from a second light detection module, the value of the parameter of the light coming from the region of interest.

12. The control module (103) according to any one of the claims 1 to 11,
the region of interest comprising an object for example a screen of an electronic device.

13. Optical device (201) intended to be worn by a user,
the optical device (201) comprising an optical element (102) and a control module (103) for adjusting a value of a parameter of a functionality of the optical element (102),
the control module being (103) configured:
- to obtain a value of a parameter of a light coming from a region of interest viewed by a user through the optical element (102),
- to obtain a value of a parameter of an ambient light surrounding the region of interest and,
- to realize an adjustment of the value of the parameter of the functionality,
the adjustment being according to the value of the parameter of the light coming from the region of interest and the value of the parameter of the ambient light, so as to take account of at least one specificity of the region of interest with respect to at least one specificity of a surrounding of the region of interest.

14. Computer implemented method for adjusting a value of a parameter of a functionality of an optical element (102),
the method comprising:
- obtaining (601) a value of a parameter of a light coming from a region of interest viewed by a user through an optical element (102),
- obtaining (602) a value of a parameter of an ambient light surrounding the region of interest, and,
- realizing (604) an adjustment of the value of the parameter of the functionality,
the adjustment being according to the value of the parameter of the light coming from the region of interest and the value of the parameter of the ambient light, so as to take account of at least one specificity of the region of interest with respect to at least one specificity of a surrounding of the region of interest.

15. Computer program comprising instructions which, when the computer program is executed by a control module (103), cause the control module (103) to carry out a method for adjusting a value of a parameter of a functionality of an optical element
the method comprising:
- obtaining (601) a value of a parameter of a light coming from a region of interest viewed by a user through the optical element (102),
- obtaining (602) a value of a parameter of an ambient light surrounding the region of interest, and,
- realizing (604) an adjustment of the value of the parameter of the functionality,
the adjustment being according to the value of the parameter of the light coming from the region of interest and the value of the parameter of the ambient light, so as to take account of at least one specificity of the region of interest with respect to at least one specificity of a surrounding of the region of interest.
